# EUROPEAN PATENT SPECIFICATION

(11) **EP 1 948 424 B1**
(45) Date of publication and mention of the grant of the patent: **16.09.2009**
(21) Application number: 06805561.5
(22) Date of filing: 10.11.2006
(51) Int. Cl.: B29C 70/44, B29C 70/54, B29L 9/00

(54) **PRODUCTION OF LAMINATE BY RESIN INJECTION**
LAMINATHERSTELLUNG DURCH HARZEINSPRITZUNG
PRODUCTION D'UN STRATIFIE PAR INJECTION DE RESINE

(30) Priority: 14.11.2005 DK 200501577
(43) Date of publication of application: 30.07.2008
(73) Proprietor: LM GLASFIBER A/S, 6640 Lunderskov (DK)
(72) Inventor: LILLEHEDEN, Lars Tilsted, DK-6000 Kolding (DK)
(74) Representative: Sundien, Thomas
(86) International application number: PCT/DK2006/000623
(87) International publication number: WO 2007/054097

(56) References cited:
- WO-A-03/101708
- WO-A-20/04000536
- DE-A1- 10 105 976
- ANONYMOUS: "Basic Vacuum Bagging" INTERNET ARTICLE, [Online] 4 March 2006 (2006-03-04), XP002415196 Retrieved from the Internet: URL:http://www.resininfusion.com/vac_demo. html> [retrieved on 2007-01-17]

## Description

The invention relates to a method of producing a laminate comprising the generation of a negative pressure between a mould part and a vacuum foil. The resin is supplied to the laminate layers in the mould from one or more compressible inlet passages that are situated underneath the vacuum foil.

### Background

One method used for producing laminates is the so-called VARTM technique (Vacuum Assisted Resin Transfer Molding), wherein a negative pressure is used to impregnate the various layers of the laminate with resin. The layers are laid in a one-sided, open mould part, above which a number of inlet passages are distributed from which the resin is infused on injected. The entire arrangement is covered by a vacuum foil, and vacuum is applied in the mould cavity between the foil and the mould part. Following complete or partial curing of the laminate, the foil and optionally the inlet passages is/are also removed, and the laminate can be ejected from the mould. The system with inlet passages distributed across large parts of the laminate surface enables control of the resin supply, whereby the resin can be distributed and injected optimally with ensuing best and quickest possible impregnation of the laminate.

However, it is a considerable drawback of the system of inlet passages that a relatively large amount of resin remains in the passages following the injection procedure. One option is to allow the inlet passages to stay in and partake in the final laminate; however, such resin-containing layer will not contribute positively to the structural properties of the laminate arid thus results in an unnecessary increase in the weight of the laminate. Alternatively the inlet passages can be removed along with the vacuum foil. The resin in the passages which may be present in a fairly large amount will then be wasted. Simultaneously problems may occur when the inlet passages are torn off, since resin portions may remain on the laminate in the shape of burrs that are subsequently to be removed.

One method of emptying the inlet passages of resin in order to thereby avoid waste is described in WO 2004/000536 relating to a type of inlet profiles which has movable parts. The exterior of the profiles as such is fixed and is not changed during the manufacture of the composite element, whereas the interior consists of two separate passages with a flexible wall section there between. The resin travels in the one passage which has holes leading down to the subjacent fibre layers and this passage can be closed and opened by moving the movable wall by drawing vacuum into the upper passage. Hereby the inlet passages can be emptied completely of resin and, likewise, it is ensured that the resin passages can be opened and closed independently of the vacuum foil pressure from the outside. However, the inlet profiles have a complex geometry, the production costs of which are also increased by the movable parts. Likewise, the method requires that a vacuum is maintained in the one passage to uphold the injection which complicates and adds to the cost of the process.

DE 10105976 uses elastic inlet passages that, following finished infusion, collapse due to the negative pressure in the mould cavity and a very elastic vacuum foil. Hereby the problem of resin waste in the inlet passages following injection is obviated. In practice, however, it is found that it is extremely difficult with the compressible inlet bags to initiate the process by injecting resin as the pressure of the vacuum foil makes it difficult for the inlet passage to open. Moreover, a vacuum foil with sufficient elasticity is not commonly available on the market.

### Object and description of the invention

It is the object of the invention to provide a method of injecting resin in laminates whereby the above problems of waste of resin are obviated. Further objects will appear elsewhere in the text.

Thus, the present invention relates to a method of manufacturing a laminate comprising generation of negative pressure between a mould part and a vacuum foil and supplying resin to the layers of the laminate placed in the mould from one or more compressible inlet passages situated underneath the vacuum foil, wherein a step of the method comprises forming of an excessive length on the vacuum foil above the inlet passages. Hereby the advantage is obtained that it is ensured that the inlet passages are able to expand to a required extent during the resin supply and independently of the ability of the vacuum foil to deform elastically. An elastic vacuum foil is thus not necessary to make the resin injection proceed efficiently. Moreover, the method entails that the resin injection can be started up quickly whereby it is accomplished, on the one hand, that the injection can be carried out more quickly and, on the other, that the process of impregnating all areas of the laminate can be better controlled and checked. Also the use of the compressible inlet passages means that the resin waste can be minimised as they will be emptied by the pressure of the vacuum foil following injection. In view of the fact that the passages are emptied of resin, the problem of resin burrs remaining on the finished laminate is reduced. The need for subsequent treatment is thus reduced, meaning both that the manufacturing time is considerably shorter and the production costs are reduced. Moreover the method can be carried out with simple inlet bags of an elastic material, eg a plastics foil which is inexpensive to manufacture.

According to one embodiment of the invention, the excess length above an inlet passage is formed by the inlet passage being inflated prior to a negative pressure being generated between the fixed mould part and the vacuum foil. This is advantageous in being a simple and easy procedure that can be carried out with the existing production equipment without cost-adding investments.

The method according to the invention also relates to the excess length above an inlet passage being formed by inflating another passage situated along the inlet passage prior to establishment of negative pressure. Hereby it is possible to use two separate systems, on the one hand for inflating the one passage, and on the other for the resin supply which may also be controlled separately and independently.

Moreover the invention relates to a method of manufacturing a laminate according to the above further comprising complete or partial emptying of at least one inlet passage of resin by compression of that inlet passage. This may be accomplished by allowing the vacuum foil to compress the inlet passage as a consequence of the negative pressure and/or by inflating another passage situated along the inlet passage. The advantages of this are, as described earlier, that the resin waste and the risk of resin burrs on the laminate are minimised.

### Brief description of drawings

In the following the invention is described with reference to the figures, wherein
Figure 1 shows the manufacture of a laminate by a VARTM-process;
Figure 2 is a sectional view of an inlet passage and a vacuum foil laid on a laminate prior to moulding;
Figures 3-4 show a inflated inlet passage prior to and during application of vacuum;
Figure 5 shows the vacuum cloth with excess length prior to starting the resin injection;
Figure 6 shows the same section during resin injection;
Figure 7 shows another embodiment of the inlet passage;
Figure 8 shows an air passage situated along an inlet passage underneath the vacuum foil; and
Figure 9 shows another embodiment of the vacuum foil that increases the compressibility of the foil.

### Description of embodiments

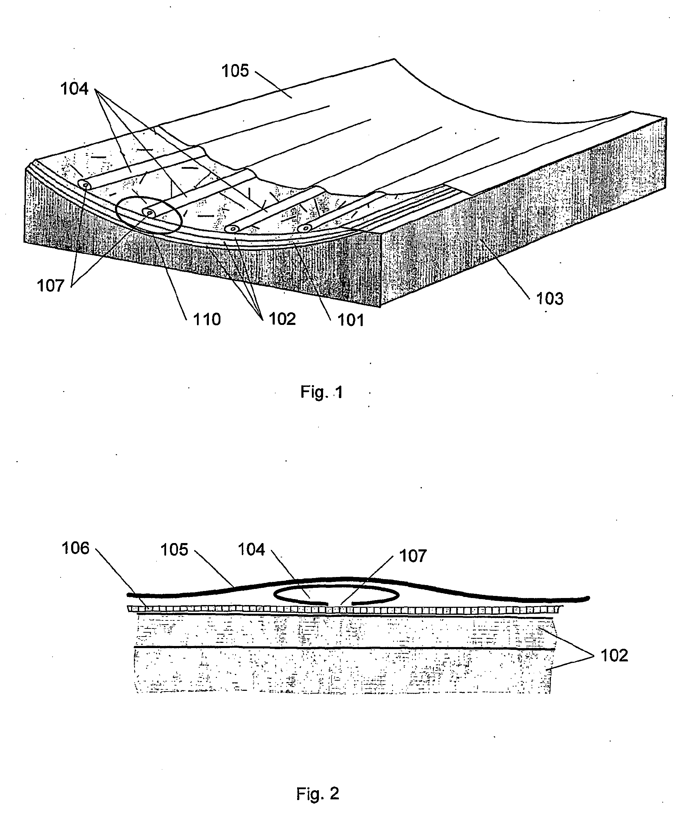

Figure 1 shows the production of a laminate 101 by a so-called VARTM process (Vacuum Assisted Resin Transfer Moulding), which is a widely used method by which layers 102 in the laminate are impregnated by resin by means of vacuum. A number of layers 102 are arranged in a one-sided mould part 103. Above, the inlet passages 104 are arranged from which the resin is distributed and infused or injected down into and out through the layers 102. The inlet passages 104 are distributed above the layers whereby the resin distribution can be as even and uniform as possible and whereby pockets are avoided where the layers are not impregnated. The layers are covered by a vacuum cloth or foil 105, which may be secured in various ways at the edge of the mould (not shown), whereby the mould cavity between the vacuum foil and the mould part is sealed. Prior to starting the injection, vacuum is applied in the mould cavity. This can be done in various ways, eg from the edge of the mould or via suctions from the bottom side of the layers through holes in the mould part 103. Then the resin is distributed from the inlet passages out of a number of holes 107 and impregnates the layers 102, either exlusively by infusion due to the applied vacuum or by injection, where the resin supply is also pressurized. If, following curing of the laminate, the inlet passages 104 are to be removed in order not to contribute unnecessarily to the weight of the laminate, a tear-off layer with poor adhesion may be arranged just above the layers of the laminate. As mentioned earlier, quite some resin remains in the inlet passages, when the production is finished, which is wasted and, likewise, burrs of resin may remain on the laminate surface which are to be removed manually. The resin waste can be avoided by manufacturing the inlet passages from an elastic material, whereby the pressure from the vacuum cloth will compress the passages when the resin supply is stopped. However, the passages will then also be compressed before the onset of the resin supply due to the negative pressure prevailing in the vacuum cavity, and it may therefore be difficult, if not impossible, to get the flow of resin started in the inlet passages.

The method of enhancing the efficiency of the resin injection according to the invention is described in further detail by means of Figures 2-6. The figures are cross-sectional views of the marked section 110 in Figure 1 in larger detail at various points in time during the manufacturing process. Above the laminate layers 102 a tear-off layer 106, an inlet passage 104 and, at the top, the vacuum foil 105 are arranged.

Figure 2 shows the scenario following laying of the various elements for use in the manufacture and prior to a negative pressure being generated in the mould cavity. As inlet passage 104 an elastic tube or bag is used which may be pressed to be approximately flat. Here, the inlet passage 104 has an approximately round cross-section and is pressed slightly flat by the weight of the vacuum foil 105.

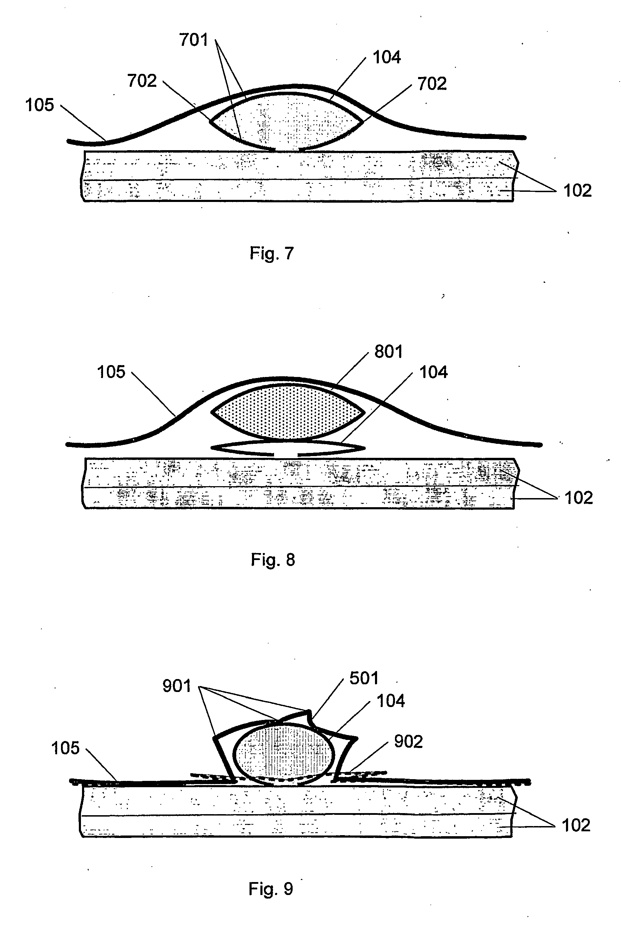

Likewise, the inlet passage 104 may be configured with other cross-sections, of which another possible embodiment is shown in Figure 7. For instance, the inlet passage may be configured from a soft plastics material, a rubber or a plastics foil, and may thus be made at low production costs. On the bottom face, between the passage 104 and the laminate layers 102, a number of holes 107 are provided, through which the resin may flow down and out into the layers. The sizes of the holes 107, their position and distribution can be varied down along the expanse of the inlet passages to achieve the optimal distribution of the resin.

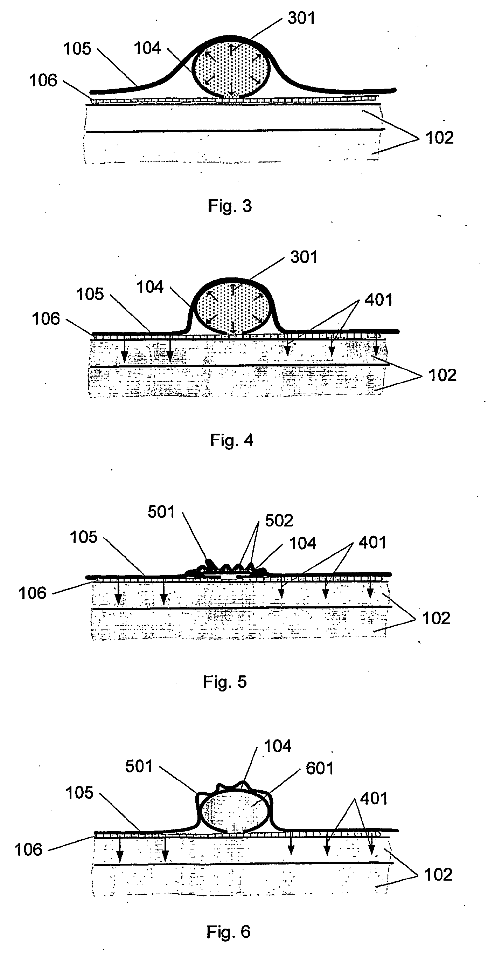

In Figure 3, the inlet passage 104 is inflated as illustrated by arrows 301, whereby the vacuum foil 105 is lifted correspondingly up around the passage and adapts to the expanded mould. Then, Figure 4, a negative pressure 401 is generated between the mould part and the foil 105, whereby the vacuum foil is drawn close. When the air is now discharged from the inlet bag, an excess length 501 is formed on the vacuum foil 105 just above the passage 104, since, in that place, there will be more vacuum foil than across the remainder of the surface. This is shown in Figure 5. Owing to the negative pressure the inlet passage 104 is compressed by the vacuum foil 105 which is laid in wrinkles or folds 502 on top.

As shown in Figure 6, the formed excess length 501 on the vacuum foil 105 enables that the inlet passage 104 has sufficient space for expansion, meaning that the resin 601 can be allowed to come in and flow easily and unobstructed through the passages 104. By the described method it is thus easier to start the resin injection, which is thereby performed more quickly and better and can be controlled and checked. When the supply of resin has ended, the vacuum foil 105 will again, as earlier- in Figure 5, be drawn down towards the laminate 101 and thus compress the inlet passages 104 which are thereby emptied completely of resin. The described method with excess length 501 in the vacuum cloth thus also solves the problem associated with superfluous resin in the inlet passages that would otherwise be wasted. Thus, the method enables the option that it is possible to reuse the inlet passages, depending on which material they are made of. This could be an option for instance where passages of silicon rubber are concerned. Alternatively the inlet passages may be made of an inexpensive material, emptied of resin and discarded after use. Additionally, the method is advantageous in being useful in existing systems and plants for laminate production with the small modification only that some means, such as a compressor, is to be connected for blowing air or a gas into the inlet passages, while negative pressure is generated in the mould cavity. Moreover, the method is efficient independently of the ability of the vacuum foil to deform elastically. Even with very slightly elastic foil the excess length provided above the inlet passages ensure that they can be filled with resin without problems.

Figure 7 outlines an alternative embodiment of an inlet passage 104 having a cross-section enabling it to be compressed entirely and thus, depending on choice of material, be emptied better. The passage is configured as two arches 701 combined in acute angles 702.

In anther embodiment, the excess length 501 of the vacuum foil 105 may be provided by inflation of another passage 801, which passage 801 is situated along the inlet passage 104 of the resin. Besides, the method extends as described above. This embodiment is advantageous in that the inflation can be controlled independently of the resin supply and by two separate systems, and consequently there is no need to switch from air to resin supply on the same tubing system. In the figure, the two separate passages 104, 801 are shown to have the same cross-section, but this is not necessary and, likewise, they may just as well be situated completely or partially next to each other and not necessarily on top of each other. It is also an option that the two passages 104, 801 are interconnected or constitute one overall passage with two cavities.

Finally, Figure 9 shows how the vacuum foil 105 according to one embodiment of the invention may be configured with bends or kinks 901 that are configured in the foil 105 a certain number, in particular in the regions where the inlet passages 104 are to extend. Thus, the vacuum foil 105 will preferably fold at the pre-deformed bends 901, and therefore it is possible to draw the foil closer to the laminate layers 103 on a section with an excess length 501 than is the case if the excess length of the foil is in creases. The vacuum foil during suction and without inflated inlet passage is outlined in Figure 9 by a dotted line 902. Thus, the inlet passages can be compressed more.

It will be understood that the invention as disclosed in the present description and figures can be modified or changed while continuing to be comprised by the scope of protection conferred by the following claims.

## Claims

1. A method of manufacturing a laminate (101) comprising generation of a negative pressure between a mould part (103) and a vacuum foil (105) and supply of resin to the laminate layers (102) situated in the mould from one or more compressible inlet passages (104) situated underneath the vacuum foil, **characterised in that** an excess length is formed on the vacuum foil (105) above the inlet passages (104).

2. A method of manufacturing a laminate according to claim 1, **characterised in that** the excess length above an inlet passage is formed by inflating the inlet passage prior to a negative pressure being generated between the mould part and the vacuum foil.

3. A method cf manufacturing a laminate in accordance with one or more of claims 1-2, **characterised in that** the excess length above an inlet passage is formed by inflation of another passage situated along the inlet passage, prior to negative pressure being generated between the mould part and the vacuum foil.

4. A method of manufacturing a laminate according to one or more of claims 1-3, **characterised in** further comprising complete or partial emptying of at least one inlet passage of resin by compression of the inlet passage.

5. A method of manufacturing a laminate according to claim 4, **characterised in that** at least one inlet passage is emptied completely or partially of resin by allowing the vacuum foil to compress the inlet passage due to the negative pressure.

6. A method of manufacturing a laminate according to one or more of claims 4-5, **characterised in that** at least one inlet passage is emptied completely or partially of resin by inflating another passage situated along the inlet passage.

## Patentansprüche

1. Verfahren zur Herstellung eines Laminats (101), umfassend das Erzeugen eines negativen Drucks zwischen einer Form (103) und einer Vakuumfolie (105) und die Zufuhr eines Harzes zu den in der Form vorgesehenen Laminatschichten (102) aus einem oder mehreren unterhalb der Vakuumfolie vorgesehenen komprimierbaren Einlasskanälen (104), **dadurch gekennzeichnet, dass** an der Vakuumfolie (105) oberhalb der Einlasskanäle (104) ein Überstand ausgebildet ist.

2. Verfahren zur Herstellung eines Laminats nach Anspruch 1, **dadurch gekennzeichnet, dass** der oberhalb eines Einlasskanals vorgesehene Überstand durch Aufblasen des Einlasskanals vor einem zwischen der Form und der Vakuumfolie erzeugten negativen Druck ausgebildet ist.

3. Verfahren zur Herstellung eines Laminats nach einem oder mehreren der Ansprüche 1 bis 2, **dadurch gekennzeichnet, dass** der oberhalb eines Einlasskanals vorgesehene Überstand durch Aufblasen eines anderen, entlang des Einlasskanals angeordneten Kanals vor einem zwischen der Form und der Vakuumfolie erzeugten negativen Druck ausgebildet ist.

4. Verfahren zur Herstellung eines Laminats nach einem oder mehreren der Ansprüche 1 bis 3, **dadurch gekennzeichnet, dass** das Verfahren ferner den Schritt einer ganzen oder teilweisen Entleerung von Harz aus mindestens einem Einlasskanal durch Komprimierung des Einlasskanals umfasst.

5. Verfahren zur Herstellung eines Laminats nach Anspruch 4, **dadurch gekennzeichnet, dass** mindestens ein Einlasskanal ganz oder teilweise von Harz **dadurch** entleert wird, dass die Vakuumfolie infolge des negativen Drucks den Einlasskanal komprimiert.

6. Verfahren zur Herstellung eines Laminats nach einem oder mehreren der Ansprüche 4 bis 5, **dadurch gekennzeichnet, dass** mindestens ein Einlasskanal durch Aufblasen eines anderen, entlang des Einlasskanals vorgesehenen Kanals ganz oder teilweise entleert wird.

## Revendications

1. Procédé de fabrication d'un stratifié (101) comprenant la génération d'une pression négative entre une partie de moule (103) et un film à vide (105) et l'alimentation de résine aux couches de stratifié (102) situées dans le moule à partir d'un ou plusieurs passages d'entrée compressibles (104) situés sous le film à vide, **caractérisé en ce qu'**une longueur en excès est formée sur le film à vide (105) au-dessus des passages d'entrée (104).

2. Procédé de fabrication d'un stratifié selon la revendication 1, **caractérisé en ce que** la longueur en excès au-dessus d'un passage d'entrée est formée en gonflant le passage d'entrée avant qu'une pression négative ne soit générée entre la partie de moule et le film à vide.

3. Procédé de fabrication d'un stratifié selon l'une quelconque ou plusieurs des revendications 1 et 2, **caractérisé en ce que** la longueur en excès au-dessus d'un passage d'entrée est formée en gonflant un autre passage situé le long du passage d'entrée, avant qu'une pression négative ne soit générée entre la partie de moule et le film à vide.

4. Procédé de fabrication d'un stratifié selon l'une quelconque ou plusieurs des revendications 1 à 3, **caractérisé en ce qu'**il comprend en outre la vidange complète ou partielle d'au moins un passage d'entrée de résine par compression du passage d'entrée.

5. Procédé de fabrication d'un stratifié selon la revendication 4, **caractérisé en ce qu'**au moins un passage d'entrée est vidé complètement ou partiellement de la résine en permettant au film à vide de comprimer le passage d'entrée sous l'effet de la pression négative.

6. Procédé de fabrication d'un stratifié selon l'une quelconque ou plusieurs des revendications 4 à 5, **caractérisé en ce qu'**au moins un passage d'entrée est vidé complètement ou partiellement de la résine en gonflant un autre passage situé le long du passage d'entrée.
